(19) Europäisches Patentamt
European Patent Office
Office européen des brevets

(11) Veröffentlichungsnummer: **0 152 049**
**B1**

(12) # EUROPÄISCHE PATENTSCHRIFT

(45) Veröffentlichungstag der Patentschrift: **30.08.89**

(51) Int. Cl.[4]: **C 08 G 18/48**, C 08 G 18/66, C 08 L 75/04

(21) Anmeldenummer: **85101169.2**

(22) Anmeldetag: **05.02.85**

(54) **Verfahren zur Herstellung von thermoplastischen Polyurethanelastomeren und ihre Verwendung.**

(30) Priorität: **16.02.84 DE 3405531**

(43) Veröffentlichungstag der Anmeldung: **21.08.85 Patentblatt 85/34**

(45) Bekanntmachung des Hinweises auf die Patenterteilung: **30.08.89 Patentblatt 89/35**

(84) Benannte Vertragsstaaten: **BE CH DE FR GB IT LI NL**

(56) Entgegenhaltungen:
**EP-A- 0 004 939**
**EP-A- 0 012 343**
**EP-A- 0 131 714**
**GB-A- 1 577 222**
**US-A- 4 010 146**
**Die Akte enthält technische Angaben, die nach dem Eingang der Anmeldung eingereicht wurden und die nicht in dieser Patentschrift enthalten sind.**

(73) Patentinhaber: **BAYER AG**
**D-5090 Leverkusen 1 Bayerwerk (DE)**

(72) Erfinder: **Goyert, Wilhelm, Dr.**
**Haberstrasse 48**
**D-5090 Leverkusen 1 (DE)**
Erfinder: **Winkler, Jürgen**
**Gerhart-Hauptmann-Strasse 14-16**
**D-5090 Leverkusen 3 (DE)**
Erfinder: **Wagner, Hans, Dr.**
**Tizian-Strasse 13**
**D-4047 Dormagen 1 (DE)**
Erfinder: **Hoppe, Hans-Georg**
**Kurlandweg 31**
**D-5653 Leichlingen (DE)**

**EP 0 152 049 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Anmeldung betrifft ein Verfahren zur Herstellung von steifen, elastischen, kälteflexiblen, homogen einfärbbaren, wenig vergilbenden, hydrolysenfesten, keine perlmuttartige Segregierung der Hartsegmente aufweisenden, aber eine ausgezeichnete Kälteschlagfestigkeit, Reißfestigkeit und hohen Modul besitzenden Polyurethanelastomeren mit relativ niedriger Dichte von 1,10 bis 1,17 $Mg/m^3$ und hoher Shore D-Härte von 55 bis 80.

Diese Polyurethanelastomere weisen für thermoplastische Polyurethane eine niedrige Dichte, eine hervorragende Kältschlagfestigkeit und hohe Festigkeiten und Weiterreißfestigkeiten auf. Die Elastizität dieser Werkstoffe ist sehr hoch und ihre Hartsegmente sind nicht derart segregiert, daß sie zu perlmuttartiger Struktur führen, welche unerwünscht ungleichmäßige Einfärbungen oder Pigmentierungen ergibt Die hochelastischen Werkstoffe hoher Härte lassen sich nach verschiedenen Verfahrenstechniken, bevorzugt in einer Art One-Shot-Reaktion auf einer selbstreinigenden Zweischneckenknetmaschine herstellen.

Der Aufbau von Polyurethanelastomeren auf der Basis von Polytetramethylenetherdiolen, Diisocyanaten und Kettenverlängerern ist im Prinzip bekannt. Versucht man jedoch, sehr hart eingestellte Polyurethanelastomere auf der Basis von höhermolekularen Polytetramethylenetherdiolen (Polytetrahydrofurandiolen) mit einer Molmasse von ca. 1 200 bis 1 500 herzustellen, so zeigen die Elastomere üblicherweise eine starke Separierung von Hart- und Weichsegmenten, wenn das molare Verhältnis von Diisocyanaten (z. B. Diphenylmethandiisocyanat = MDI) zu Polyetherdiolen hart eingestellt, d. h. auf $\geqslant 8:1$ angehoben wird. Dies äußert sich durch einen starken Perlmutteffekt bzw. bei Einfärbungen oder Pigmentierungen durch starke Schlieren in den Spritzgießteilen. Die Festigkeiten, besonders der Weiterreißwiderstand, werden durch den Perlmutteffekt (die Segregierung) stark reduziert, so daß bei dünnen Wandstärken die Ausreißfestigkeit (z. B. von Schnallen bei Skischuhaußenschalen) zu gering wird.

In den Beispielen der DE-A-28 54 409 werden Polyesterurethanelastomere insbesondere mit Butandiol-1,4 als Kettenverlängerer hergestellt. Werden solche Produkte auf eine Steifigkeit von etwa 40 MPa angehoben, dann sinkt ihre Schlagzähigkeit in der Kälte (nur ca. 20 bis 40 % im Schlagzugversuch).

Bei Verwendung von Polyetherpolyolen neben Butandiol-1,4 als alleinigem Kettenverlängerungsmittel erhält man stark perlmuttartig strukturierte Elastomere, die im Skischuhsektor wegen der diskutierten Eigenschaften nicht einsetzbar sind.

Gemäß DE-A-28 54 407 erhält man in ähnlicher Weise thermoplastisch verarbeitbare Blends aus thermoplastischen Polyurethanen auf Basis von Polyethern oder Polyestern und eines Pfropfprodukts von 65 bis 95 Gew.-% einer als Pfropfgrundlage dienenden Elastomerkomponente und 5 bis 35 Gew.-% eines oder mehrerer hierauf aufgepfropfter Monomerer. Die so erhaltenen Blends von Polyetherurethanen zeigen ebenfalls eine schlechtere Schlagzähigkeit bei tiefen Temperaturen und sind nicht frei von Segregationserscheinungen (dem Perlmutteffekt). Die Festigkeiten der Produkte sind infolge der Segregation reduziert.

Zu einem ähnlichen Ergebnis bezüglich des Perlmutteffektes gelangt man auch nach dem in der EP-A-12 343 beschriebenen Verfahren, bei dem höhermolekulare Polypropylenoxid- und Polyethylenoxidetherpolyole als höhermolekulare Polyhydroxylverbindungen eingesetzt werden, und zwar in Kombination mit bestimmten Copolymerisaten oder Pfropfpolymerisaten und Stabilisatoren, um einen Abbau der Produkte während des Extrudiervorgangs zu verhindern. Die Vergilbung stendenz dieser Produkte ist (ähnlich wie bei jenen von DE-A-28 54 409) sehr hoch, die Kälteschlagfestigkeit ungenügend und die Festigkeiten/ Moduli verbesserungsbedürftig.

Entsprechend der US-A-4 179 479 werden neben thermoplastischen Polyurethanen ABS-Pfropfcopolymere und zusätzlich 0,5 bis 10 Gew.-% an « processing aids » eingesetzt, die ein Acrylatpolymer des Molekulargewichtes 500 000 bis 1 500 000 darstellen (z. B. Homopolymere von Methylmethacrylat und Butylmethacrylat, Copolymere von Methylmethacrylat und Ethylacrylat und Terpolymere von Methylmethacrylat, n-Butylacrylat und Styrol), gegebenenfalls in Mischung mit phenolischen Antioxidantien und UV-Absorbern. Durch die Verwendung von Acrylatpolymeren als « processing aids » läßt sich die Verarbeitung in Extrusionsprozessen verbessern.

Auch dieses Verfahren führt zu perlmuttartig segregierten Produkten mit schlechteren Festigkeiten, auch bei tiefen Temperaturen. Die verwendeten ABS-Typen sind hoch styrolhaltig.

In der EP-A-4 939 wird ein Gemisch von Diolkettenverlängerungsmitteln, z. B. aus Butandiol-1,4 und Hexandiol-1,6, in Mengen verhältnissen von 90 bis 99 zu 1 bis 10 Gew.-%, zur Herstellung von Extrusions- und Kalander-PU-Elastomeren beschrieben. Die Verwendung von Pfropfkautschuk ist in dieser Druckschrift nicht vorgesehen. Die Verfahrensprodukte zeigen bei harter Einstellung des Polyurethans noch immer einen starken Perlmutteffekt und vergilben auch sehr stark. Bei Verwendung von Hexamethylendiisocyanat weisen die Polyurethanthermoplasten nach UV-Belichtung stark reduzierte Festigkeiten auf.

Es war Aufgabe der Erfindung, auf der Basis von Polyetherdiolen, Diphenylmethandiisocyanat und Diolkettenverlängerungsmitteln in harter Einstellung (d. h. vorzugsweise mindestens 5 Mol Diol-Kettenverlängerer pro Mol Tetrahydrofurandiol) thermoplastische Polyurethanelastomere herzustellen, welche eine homogene Verteilung der Hartsegmente (keine perlmuttartig-inhomogene Separierung der Hartsegmente), ferner eine hervorragende Kälteschlagfestigkeit, Reißfestigkeit und hohen Modul zeigen, welche nur wenig vergilben, sich homogen einfärben lassen und sich unproblematisch extrudieren und insbesondere zu Spritzgußteilen relativ niedriger Dichte für den Automobil- und Skischuh-Sektor verarbeiten lassen.

Gegenstand der Erfindung ist ein Verfahren zur Herstellung von thermoplastischen Polyurethanelastomeren durch Umsetzung von

A) 4,4'-Diisocyanatodiphenylmethan oder dessen Isomerengemisch mit bis zu 5 Mol-%, vorzugsweise 0,5 bis 5 Mol-%, 2,4'-Diisocyanatodiphenylmethan mit

B) einem Polytetramethylenetherdiol der Molmasse 800 bis 3 000, bevorzugt 1 000 bis 1 500, sowie gegebenenfalls bis zu 60 Gew.-% anderen höhermolekularen Polyhydroxylverbindungen des Molekulargewichts 800 bis 3 000, und

C) einem Gemisch Ca) von einem Hauptkettenverlängerer-Diol und einem oder mehreren Cokettenverlängerer-Diolen Cb) im Molverhältnis von 97 : 3 bis 72 : 28, bevorzugt 94 : 6 bis 87 : 13, wobei der Hauptkettenverlängerer Butandiol-1,4 oder Hexandiol-1,6 und der zweite Kettenverlängerer ein Diol vom Molekulargewicht 62 bis 399, bevorzugt Hexandiol-1,6, Butandiol-1,4, Diethylenglykol, Dipropylenglykol, Tripropylenglykol oder Hydrochinon-di-β-hydroxyethylether oder das Reaktionsprodukt davon mit Diisocyanatodiphenylmethan ist,
wobei das Molverhältnis von Komponente A) zu Komponente B) 5 : 1 bis 300 : 1, jenes von C) zu B) vorzugsweise mindestens 5 : 1 und das von A) zu B) + C) 0,9 : 1 bis 1,2 : 1 betragen,
in Gegenwart von

D) einem thermoplastischen Pfropfkautschuk auf Butadienbasis, bevorzugt mit 30 bis 50 Gew.-% Butadien-Pfropfgrundlage und einer thermoplastischen Harzkomponente aus Styrol und Acrylnitril und gegebenenfalls Methacrylaten, insbesondere Methylmethacrylat, als Pfropfmonomeren
in Mengen von 5 bis 25 Gew.-%, bezogen auf die Komponenten A) bis C), und

E) 0,1 bis 3 Gew.-%, bezogen auf die Gesamtmenge aller Komponenten, an Antioxidantien, UV-Absorbern und/oder Lichtschutzmitteln
oder durch nachträgliche Mischung des Polyurethans mit dem thermoplastischen Pfropfkautschuk D.

Eine besonders bevorzugte Ausführungsform ist dadurch gekennzeichnet, daß als Komponente C) eine Mischung von 87 bis 94 Mol-% Butandiol-1,4 als Hauptkettenverlängerer und 13 bis 6 Mol-% Hexandiol-1,6 als Cokettenverlängerungsmittel eingesetzt wird.

Eine weitere besonders bevorzugte Ausführungsform ist dadurch gekennzeichnet, daß der thermoplastische Pfropfkautschuk in einer Menge von 6 bis 15 Gew.-% eingesetzt wird.

Das Diisocyanat A) kann auch durch geringe Mengen an Diolen C) modifiziert sein.

Die höhermolekulare Polyhydroxylverbindung B) hat vorteilhafterweise eine mittlere Molmasse von 1 000 bis 1 500. Dem Polytetramethylenetherdiol können andere höhermolekulare Polyhydroxylverbindungen, z. B. andere Polyether oder Polyester oder Polycarbonate, in einer Menge bis zu 60 Gew.-%, vorzugsweise zu weniger als 40 Gew.-%, zugemischt werden. Derartige höhermolekulare Polyole sind z. B. in der DE-A-28 54 409 beschrieben. Innerhalb der anderen höhermolekularen Polyole hat sich als Zumischung das Butandiol-1,4-adipat oder Butandiol-1,4/Ethandiol-Mischadipat als günstig erwiesen. Die Molmasse solcher Polyetherdiol + Polyesterdiol-Gemische liegt vorzugsweise bei 1 800 bis 2 500.

Das Molverhältnis von Komponente A) zu Komponente B) beträgt vorzugsweise 8 : 1 bis 15 : 1. Besonders bevorzugt sind Verhältnisse von 9 : 1 bis 13 : 1. Produkte dieser Art ergeben eine Shore D-Härte in den Elastomeren von 55 bis 80 ; bevorzugt sind solche von 63 bis 72.

Der Cokettenverlängerer C b) kann auch über das Diisocyanatodiphenylmethan (MDJ) eingebracht werden.

Für die Pfropfkautschuke D) werden als Pfropfmonomerkomponente Gemische der Monomeren Styrol und Acrylnitril im Gewichtsverhältnis 90 : 10 bis 50 : 50 bevorzugt.

Als Antioxidantien E können alle an sich bekannten Produkte, wie sie in der EP-A-12 343 beschrieben sind, eingesetzt werden. Bevorzugt sind Antioxidantien auf Basis sterisch gehinderter Phenole, wie z. B. 2,6-Di-t-butyl-4-methyl-phenol und Pentaerythrityl-tetrakis-3-(3,5-di-t-butyl-4-hydroxyphenyl)-propionat (®Irganox-1010, der Firma Ciba Geigy).

Als UV-Absorber E können Produkte eingesetzt werden, wie sie dem Stand der Technik entsprechen, z. B. 2-(2'-Hydroxyphenyl)-benztriazol-Derivate wie Tinuvin®326, 327, 328 oder Tinuvin®P (der Ciba Geigy), Hydroxy benzophenonderivate und andere ; besonders bevorzugt werden Cyanacrylesterderivate nach DE-PS 1 793 797, z. B.

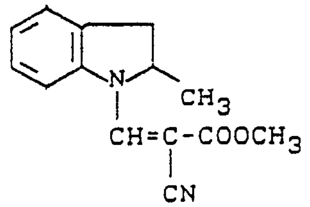

Als Lichtschutzmittel werden solche auf Basis von 2,2,6,6-Tetraalkylpiperidinen und besonders 1,2,2,6,6-Pentaalkylpiperidinen bevorzugt.

Beispiele für Hydroxyphenylbenztriazol-Derivate sind in DE-AS 1 794 144, Spalte 5-7, aufgeführt. Beispielsweise sind geeignet der Sebacinsäure-bisester mit 4-Hydroxy-2,2,6,6-Tetramethylpiperidin (Tinuvin®-770), insbesondere aber Pentamethylderivate wie

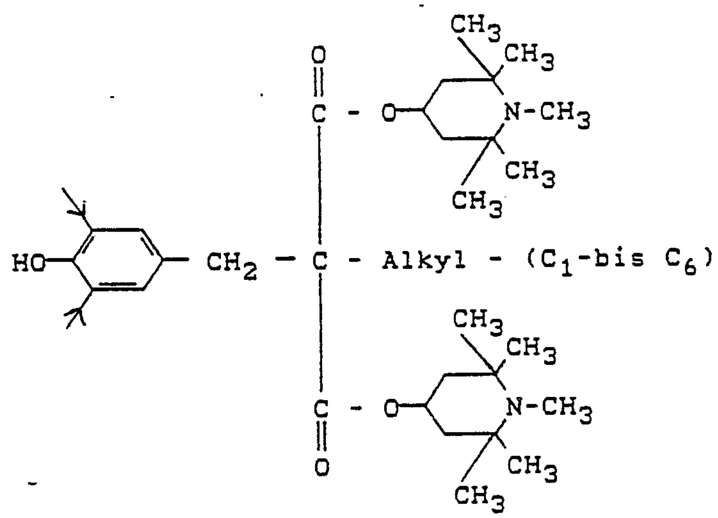

(z. B. Tinuvin®-144)

(← = tertiär-Butylgruppe)

oder oligomere oder polymere, N-substituierte Derivate, wie z. B.

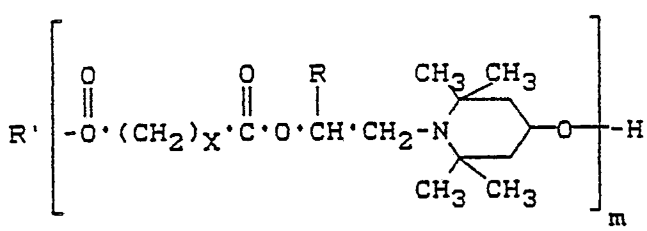

(X = 2-10)
(R = H, $CH_3$)
(R' = Alkyl, Cycloalkyl)
(Molmasse 3000)
(z. B. Tinuvin®-622 ; n = 2 ; R = H ; R' = $CH_3$).

Werden Lichtschutzmittel wie Tinuvin®-144 eingesetzt, welche neben einer Tetraalkyl- oder (bevorzugt) Pentaalkyl-(z. B. Pentamethyl-) Gruppierung im gleichen Molekül eine Gruppierung eines phenolischen Antioxidans (sterisch gehinderte Phenolgruppe wie 2,6-Di-tert.-butylphenol) enthalten, so kann auf die Mitverwendung von phenolischen Antioxidantien verzichtet werden.

Bei der Durchführung der Polyurethan-Reaktion können selbstverständlich die üblichen Katalysatoren, Trennmittel, Antistatika, Flammschutzmittel, Füllstoffe, Glasfasern und Einfärbemittel nach dem Stand der Technik (siehe z. B. DE-A-28 54 409, DE-A-29 20 501 und DE-A-33 29 775) zugegeben werden.

Als Katalysatoren können z. B. tertiäre Amine, organische Metallverbindungen, insbesondere organische Zinn-, Blei- und Titanverbindungen eingesetzt werden, z. B. Zinn-II-acetat, Zinn-II-ethylhexoat, Dibutylzinndilaurat oder Bleiacetat.

Als Trennmittel werden Wachse oder Öle verwendet, ferner z. B. langkettige Verbindungen mit Carboxyl-, Ester-, Amid-, Urethan- oder Harnstoffgruppen, wie sie beispielsweise in der DE-OS 2 204 470 aufgeführt sind.

Die Mengen an Reaktionskomponenten A) bis C) werden im erfindungsgemäßen Verfahren so gewählt, daß das NCO/OH-Verhältnis von Diisocyanat zu OH-Verbindungen zwischen 0,9 und 1,2, bevorzugt zwischen 1,01 und 1,08, liegt.

Erfindungsgemäß kann auch zunächst das Polyurethan nach an sich bekannten Verfahren hergestellt und erst nachträglich mit dem Pfropfkautschuk gemischt (coextrudiert) werden.

Bevorzugt wird ein Einstufenverfahren angewandt, beispielsweise entsprechend der DE-OS

28 54 409, wobei zunächst der Pfropfkautschuk D) in eine selbstreinigende Zweischnekkenmaschine dosiert und nachfolgend die Polyurethankomponenten A) bis C) zugegeben werden. Das Polyol kann vor der Dosierung in die Reaktionsschnecke auch mit dem Diisocyanat zu einem NCO-haltigen Prepolymer umgesetzt werden.

Die weitere Verarbeitung der erfindungsgemäß hergestellten Werkstoffe wird auf den für Thermoplasten üblichen Verarbeitungsmaschinen, bevorzugt auf Spritzgießmaschinen, vorgenommen.

Ein großer Vorteil der erfindungsgemäß hergestellten Elastomere ist darin zu sehen, daß sie keine störende Separierung und keinen schillernden Perlmutteffekt der Hartsegmente zeigen. Dadurch wird eine einwandfreie Einfärbung oder Pigmentierung von größeren Spritzgießteilen ohne störende Farbschlieren möglich. Ohne Pfropfkautschuk D) und ohne Verwendung eines Kettenverlängerermittelgemischs weisen harte, kälteschlagfeste thermoplastische Polyurethane auf Polytetramethylenetherdiolbasis (mit einer Molmasse von ca. 1 500 des Polyethers) und Shore-Härten von 63 bis 72 Shore-D diesen störenden Perlmutteffekt auf.

Die erfindungsgemäß hergestellten Polyurethanelastomere verfügen über eine exzellente Schlagzähigkeit in der Kälte. Im Durchstoßversuch bei — 20 °C nach DIN 53 443 (Fallhöhe 1 m, Fallmasse 50 kg) splittern sie — im Gegensatz zu thermoplastischen Polyesterurethanen — nicht. Im Schlagzugversuch werden sehr gute Werte der Bruchdehnung erreicht, nämlich 40 bis 100 %; bei reinen Polytetramethylenetherdiolprodukten 100 bis über 200 % Dehnung. Dieses gute Niveau wird auch durch die in den Beispielen beschriebenen Antioxidant-UV-Absorber/Lichtschutzmittel-Kombination mitbedingt. Ohne diese Additive sind diese Werte ungünstiger, da bei der Extrusion eine thermische Schädigung erfolgen kann.

Der Versteifungsfaktor der erfindungsgemäß hergestellten Polyurethanelastomeren bei + 20 °C gegenüber den Meßwerten bei — 20 °C beträgt ca. 1 : 1,7 bis 1 : 2,5 (anhand der Grenzbiegespannung nach DIN 53 445 ermittelt). Bei thermoplastischen Polyesterurethanen des Standes der Technik ist dieser Versteifungsfaktor deutlich höher, er liegt zumeist bei 1 : 2,5 bis 1 : 3 oder höher.

Die Dichte der erfindungsgemäß hergestellten Elastomeren beträgt ca. 1,1 $Mg/m^3$. Dies hat bei Skistiefelschalen große Vorteile. Im Vergleich zu thermoplastischen Polyesterurethanen des Standes der Technik (Dichte ca. 1,24 $Mg/m^3$) ist die Dichte um etwa 10 % geringer.

Die Elastizität der erfindungsgemäß hergestellten Polyurethanelastomere ist deutlich erhöht. Während thermoplastische Polyesterurethane des Standes der Technik eine Rückprallelastizität von höchstens 40 % aufweisen, sind die Werte bei den erfindungsgemäß hergestellten thermoplastischen Polyetherpolyurethanmischpolymeren auf ca. 50 % angehoben.

Die erfindungsgemäß hergestellten Polyurethanelastomere besitzen einen hohen Widerstand gegen das Weiterreißen. Dies ist bei Automobilteilen oder bei Skischuhteilen äußerst wichtig. Wird die erfindungsgemäß zu verwendende Mischung der Kettenverlängerer durch einen einzigen Kettenverlängerer ersetzt, so wird der Weiterreißwiderstand der Elastomere deutlich reduziert, selbst wenn man einen Pfropfkautschuk D) eingesetzt hat.

Die folgenden Beispiele erläutern die Erfindung. Wenn nicht anders vermerkt, sind Mengenangaben als Gewichtsteile zu verstehen.

## Beispiele

In den Beispielen wird eine Zweiwellenschneckenknetmaschine des Typs ZSK 53 V der Fa. Werner & Pfleiderer, Stuttgart, mit selbstreinigendem Wellenbesatz und einem Knetelementanteil von ca. 20 % verwendet. Der Verfahrensteil besteht aus 12 separat heizbaren Gehäusen, die Länge des Verfahrensteils entspricht dem etwa 20-fachen Wellendurchmesser.

Funktion und Wirkungsweise der Schneckenmaschine, von Knet- und Förderelementen des Wellenbesatzes usw. sind in den Firmenschriften der Firma Werner & Pfleiderer bzw. in der DE-AS 2 302 564 ausführlich beschrieben.

Die Verweilzeiten der Reaktionsschmelze in der Schnekkenmaschine betragen in der Regel 0,3 bis 30, bevorzugt 0,5 bis 4 Minuten. Die Temperatur des Schneckengehäuses liegt zwischen etwa 60 und 300 °C (ca. 80 bis 280 °C in der Eingangszone ; ca. 100 bis 300 °C in der Mitte des Extruders und ca. 120 bis 250 °C in der Austragszone). Die aus dem Extruder austretende Schmelze wird nach an sich bekannten Verfahren abgeschreckt und zerkleinert.

Die Herstellung der thermoplastischen Polyurethanelastomeren erfolgt mit folgenden Ausgangsstoffen in den angegebenen Gewichtsteilen :

### Beispiel 1

a)
- 15,27 Gew.-% Polytetramethylenetherdiol, Molekulargewicht 1 000
- 15,27 Gew.-% Polytetramethylenetherdiol, Molekulargewicht 2 000
- 0,12 Gew.-% 2,6-Di-t-butyl-4-methyl-phenol
- 0,21 Gew.-% Pentaerythrityl-tetrakis-3-(3,5-di-t-butyl-4-hydroxyphenyl)-propionat(®Irganox-1010. Ciba Geigy)
- 0,15 Gew.-% Cyanacrylsäureester (UV-Absorber 340-BAYER AG)

b) { 12,22 Gew.-% Butandiol-1,4
   1,37 Gew.-% Hexandiol-1,6
c) 45,21 Gew.-% 4,4'-Diisocyanatodiphenylmethan, enthaltend 2,5 Gew.-% 2,4'-Isomeres
d) 0,15 Gew.-% Stearylamid
e) 10,00 Gew.-% Pfropfkautschuk (mit 50 Gew.-% Butadien, 36 Gew.-% Styrol und 14 Gew.-% Acrylnitril)

Das NCO/OH-Verhältnis beträgt 1,06 : 1.

Die Komponente a) wird aus dem 120 °C heißen Vorlagekessel über eine Zahnradpumpe in das Gehäuse 2 einer Zweiwellenknetmaschine eindosiert. Ebenfalls in das Gehäuse 2 wird über eine kleine Kolbenpumpe das Diolgemisch b) bei Raumtemperatur dosiert. Die Komponente c) wird mit einer Temperatur von 60 °C über eine Zahnradpumpe in Gehäuse 3 gepumpt. Die Komponenten d) und e) werden als Pulver über Dosierschnecken in Gehäuse 1 eingebracht.

An der Schneckenmaschine wurden folgende Gehäusetemperaturen eingestellt :

| Gehäuse | 1 | 2 | 3 | 7 | 9 | 11 | 12 | Kopf | |
|---|---|---|---|---|---|---|---|---|---|
| Temperatur | 100 | 210 | 210 | 200 | 180 | 160 | 100 | 190 | °C |

Das erhaltene, thermoplastische Polyurethanelastomere weist nach dreitägiger Lagerung, Verspritzen auf üblichen Spritzgußmaschinen und Temperung der Probekörper von 15 h bei 110 °C die in Tabelle 1 beschriebenen mechanischen Eigenschaften auf. Das Verfestigungsverhalten der auf einer Spritzgußmaschine hergestellten Teile ist gut, die Anfangsfestigkeit hoch. Die Einfärbung zeigte, daß die sonst störenden Entmischungsstreifen des Hartsegments hier nicht auftreten. Die Kältewerte sind für einen Thermoplasten dieser Steifigkeit sehr gut (Schlagzugversuch : 158 % Bruchdehnung).

Tabelle 1

| Prüfung (Elastomer-Beispiel 1) | DIN-Norm | Wert | Maßeinheit |
|---|---|---|---|
| Modul/100 % | 53 504 | 31,6 | MPa |
| Modul/300 % | 53 504 | 51,2 | MPa |
| Zugfestigkeit | 53 504 | 53,3 | MPa |
| Bruchdehnung | 53 504 | 310 | % |
| Shore Härte A/D | 53 505 | 98/69 | (A/D) |
| Elastizität | 53 512 | 51 | % |
| Abrieb | 53 516 | 19 | $mm^3$ |
| Weiterreißwiderstand | 53 515 | 170 | kN/m |
| Grenzbiegespannung 23°C | 53 452 | 34,9 | MPa |
| Grenzbiegespannung -20°C | 53 452 | 69,7 | MPa |
| Schlagzugversuch -10°C | | 158 | % |
| Dichte | 53 479 | 1,11 | $Mg/m^3$ |
| Schwindung | | 0,5 | % |

Die Dichte ist mit 1,11 $Mg/m^3$ niedrig, der Weiterreißwiderstand hoch. Der Faktor der Versteifung beträgt, gemessen an der Grenzbiegespannung bei + 23 °C gegenüber dem Wert bei — 20 °C, 1 : 2.

Beispiel 2

Ansatz :

a) { 14,53 Gew.-% Polytetramethylenether-diol (OH-Zahl 56,2)
   14,53 Gew.-% Butandiol-l,4/Adipinsäurepolyester-diol (OH-Zahl 51,9)
   0,12 Gew.-% 2,6-Di-t-butyl-4-methyl-phenol
   0,20 Gew.-% ®Irganox-1010
   0,15 Gew.-% ®Tinuvin-622 (beide Fa. Ciba-Geigy)
   0,15 Gew.-% 2,2'-6,6'-Tetraisopropyl-diphenylcarbodiimid

b) 13,08 Gew.-% Butandiol-1,4
   1,45 Gew.-% Hexandiol-1,6
c) 45,64 Gew.-% 4,4'-Diisocyanatodiphenylmethan
d) 0,15 Gew.-% Carnaubawachs
e) 10,00 Gew.-% Pfropfkautschuk (wie in Beispiel 1)

Das NCO/OH-Verhältnis ist 1,06 : 1.

Die verfahrenstechnische Herstellung und Weiterverarbeitung erfolgt analog Beispiel 1. Die mechanischen Eigenschaften siehe Tabelle 2.

Tabelle 2

| Prüfung (Elastomer Beispiel 2) | DIN-Norm | Wert | Maßeinheit |
|---|---|---|---|
| Modul 100 % | 53 504 | 31,4 | MPa |
| Modul 300 % | 53 504 | 54,4 | MPa |
| Zugfestigkeit | 53 504 | 54,9 | MPa |
| Bruchdehnung | 53 504 | 301 | % |
| Shore Härte A/D | 53 505 | 98/69 | |
| Elastizität | 53 512 | 49 | % |
| Weiterreißwiderstand | 53 515 | 197 | kN/m |
| Grenzbiegespannung 23°C | 53 452 | 38,7 | MPa |
| Grenzbiegespannung -20°C | 53 452 | 89,3 | MPa |
| Schlagzugversuch -10°C | | 52 | % |
| Dichte | 53 479 | 1,13 | $Mg/m^3$ |

Dieser Thermoplast läßt sich im Spritzgußverfahren zu einwandfreien Formkörpern ohne Perlmutteffekt verarbeiten. Die Zugfestigkeit und der Weiterreißwiderstand sind hoch. Die Kälteeigenschaften sind gut, allerdings nicht so gut wie mit der erfindungsgemäß bevorzugten Polyolkomponente von Beispiel 1 (mit reinem Polytetramethyletherdiol).

Beispiele 3 bis 11

Nach den in Tabelle 3 aufgeführten Rezepturen werden thermoplastische Polyurethane 3-11 hergestellt, wobei wie in Beispiel 1 und 2 verfahren wurde. Die Versuche 3-10 stellen Variationen der Kettenverlängerer und der Pfropfkautschukmenge bzw. -art dar, wobei das Verhältnis der beiden Kettenverlängerer zueinander in den Versuchen 8 und 9 variiert.

Bei dem Versuch 11 wird ein Teil des Polytetramethylenetherdiols durch ein höhermolekulares Polyesterdiol ersetzt.

Die in den Versuchen 1-11 beschriebenen Polyurethan-Elastomere lassen sich thermoplastisch auf im Handel üblichen Spritzgußmaschinen verarbeiten. Sie zeigen wenig bis keine Entmischung des Hartsegmentes und bereiten somit beim Einfärben keine Probleme. Sie haben für ein thermoplastisches Polyurethan eine hohe Kälteflexibilität und Kälteschlagfestigkeit. Außerdem zeichnen sie sich bei der Verarbeitung durch eine gute Anfangselastizität aus. Die mechanischen Eigenschaften sind in Tabelle 4 aufgelistet.

Die erfindungsgemäßen Beispiele 3 und 4 weisen einen Gehalt von 5 Gew.-% Pfropfkautschuk D) auf. Hierdurch wird die Entmischung in den Polyurethanen reduziert, allerdings nicht so stark wie in den erfindungsgemäßen Beispielen 1 und 5 bis 7 mit dem bevorzugten Pfropfkautschukanteil von 10 Gew.-%.

Eine leichte Separierung des Hartsegmentes ist auch bei wenig Co-Kettenverlängereranteil festzustellen. Dies tritt z. B. im erfindungsgemäßen Ansatz 8 mit 4 Mol-% Hexandiol-1,6 (und 96 Mol-% Butandiol-1,4) auf, der nicht im bevorzugten Bereich des Co-Kettenverlängerers von 6 bis 13 Mol-% liegt. Werden mehr als 13 Mol-% Co-Kettenverlängerer eingesetzt (Beispiel 9), so leidet die Anfangselastizität der Formkörper etwas, der Spritzzyklus auf der Spritzgußmaschine wird länger. Der gleiche Effekt tritt auch bei einem höheren Anteil an Pfropfkautschuk auf (Beispiel 10, mit 20 Gew.-% Pfropfkautschuk).

Das erfindungsgemäße Beispiel 11 entspricht einer weichen Einstellung des Beispiels 2.

(Siehe Tabellen Seite 8 ff.)

Tabelle 3

Erfindungsgemäße Beispiele

| Komponente | | Beispiel Nr. (Angaben in Gew.-%) 3 | 4 | 5 | 6 | 7 | 8 | 9 | 10 | 11 |
|---|---|---|---|---|---|---|---|---|---|---|
| Polytetramethylenetherdiol (OHZ = 112) | a | 19,2 | 15,3 | 17,9 | 16,2 | 14,3 | 15,3 | 15,0 | 14,3 | |
| Polytetramethylenetherdiol (OHZ = 56) | a | 19,2 | 15,3 | 17,9 | 16,2 | 14,3 | 15,3 | 15,0 | 14,3 | 15,6 |
| Butandiol-1,4-adipat (OHZ = 52) | a | | | | | | | | | 15,6 |
| 2,6-Di-t-butyl-4-methylphenol | a | 0,2 | 0,2 | 0,1 | 0,1 | 0,1 | 0,1 | 0,1 | 0,1 | 0,1 |
| (siehe Beispiel 1) ®Irganox 1010 | a | 0,3 | 0,2 | 0,3 | 0,2 | 0,2 xxx) | 0,2 | 0,2 | 0,1 | 0,2 |
| Cyanacrylsäureester (UV-340) (siehe Beispiel 1) | a | 0,2 | 0,2 | 0,2 | 0,2 | 0,1 | 0,2 | 0,1 | 0,1 | 0,2 |
| Carbodiimid (siehe Beispiel 1) | a | | | | | | | | | 0,2 |
| Butandiol-1,4 | b | 15,5 | 13,7 | 10,7 | 11,7 | 12,9 | 12,9 | 11,1 | 10,3 | 12,5 |
| Hexandiol-1,6 | b | 1,2 | 1,5 | 1,3 | 1,3 | 1,4 | 0,6 | 3,0 | 1,1 | 1,4 |
| 4,4'-Diisocyanatodiphenylmethan (enthält 2,5 % 2,4'-Isomeres) | c | 43,0 | 48,6 | 41,4 | 43,8 | 46,6 | 45,3 | 45,3 | 39,3 | 44,0 |
| Carnaubawachs | d | 0,2 | 0,2 | 0,2 | 0,2 | 0,1 | 0,2 | 0,1 | 0,1 | 0,2 |
| Pfropfkautschuk (siehe Beispiel 1) | e | 5,0 x) | 5,0 | 10,0 | 10,0 xx) | 10,0 | 10,0 | 10,0 | 20,0 | 10,0 |
| NCO/OH-Verhältnis A/B+C | | 1,03 | 1,03 | 1,06 | 1,06 | 1,06 | 1,06 | 1,06 | 1,08 | 1,06 |

x) Propfkautschuk mit 30 % Butienpfropfgrundlage und Styrol/Acrylnitril (45/25)

xx) Mischung von Pfropfkautschuk nach Beispiel 1) und nach x) (1 : 1)

xxx) Anstelle von ®Irganox 1010 wurde hier ®Tinuvin-144 (Ciba-Geigy) eingesetzt.

Tabelle 4

Eigenschaften der thermoplastischen Polyurethan-Elastomeren entsprechend Beispielen 3-11 (die Zusammensetzung entspricht den Angaben von Tabelle 3)

| Prüfung | DIN-Norm | Maßeinheit | 3 | 4 | 5 | 6 | 7 | 8 | 9 | 10 | 11 |
|---|---|---|---|---|---|---|---|---|---|---|---|
| Modul 100 % | 53 504 | MPa | 26,3 | 35,1 | 29,8 | 32,2 | 34,8 | 31,5 | 30,8 | 26,4 | 28,5 |
| Modul 300 % | 53 504 | MPa | 44,8 | n.m. | 51,4 | 54,9 | 55,9 | 52,4 | 52,9 | 43,5 | 50,9 |
| Zugfestigkeit | 53 504 | MPa | 52,7 | 48,7 | 56,5 | 55,4 | 55,9 | 55,6 | 54,9 | 45,8 | 56,0 |
| Bruchdehnung | 53 504 | % | 354 | 266 | 338 | 302 | 300 | 323 | 321 | 321 | 341 |
| Shore-Härte A/D | 53 505 | | 98/65 | 99/69 | 98/68 | 97/68 | 98/72 | 98/70 | 99/69 | 97/65 | 98/66 |
| Elastizität | 53 512 | % | 48 | 50 | 51 | 51 | 54 | 52 | 50 | 47 | 48 |
| Abrieb | 53 516 | mm³ | - | 19 | - | - | 17 | - | - | - | - |
| Weiterreißwiderstand | 53 515 | kN/m | 138 | 179 | - | 151 | 172 | 172 | 148 | 153 | 174 |
| Grenzbiegespannung 23°C | 53 452 | MPa | 25,7 | 43,2 | 29,1 | 31,1 | 44,1 | 37,3 | 34,1 | 30,1 | 30,4 |
| Grenzbiegespannung -20°C | 53 452 | MPa | 61,6 | 80,2 | 61,8 | 66,0 | 78,9 | 72,1 | 71,6 | 59,2 | 81,7 |
| Schlagzugversuch -10°C | | % | 211 | 114 | 207 | 204 | 109 | 124 | 145 | 143 | 58 |
| Dichte | 53 479 | Mg/m³ | 1,11 | 1,12 | 1,11 | 1,11 | 1,12 | 1,12 | 1,12 | 1,15 | 1,14 |
| Schwindung | | % | 0 | 0,8 | 0,8 | 0,8 | 0 | 0,8 | 0 | 1,6 | 1,6 |

Nicht erfindungsgemäße Beispiele 12 bis 16 (Zum Vergleich)

Zu den nicht erfindungsgemäßen Beispielen zählen die Ansätze 12 bis 16, sie sind in Tabelle 5 aufgeführt. Die mechanischen Eigenschaften dieser Ansätze gibt Tabelle 6 wieder.

Die Probekörper des thermoplastischen Polyurethans aus Ansatz 12, der ohne den Co-Kettenverlängerer hergestellt wurde, zeigen deutliche Entmischungserscheinungen. Außerdem sind die mechanischen Eigenschaften wie Bruchdehnung, Rückprallelastizität, Weiterreißwiderstand und das Kälteverhalten schlechter als beim vergleichbaren erfindungsgemäßen Beispiel 1.

Der Ansatz 13 zeigt ohne die erfindungsgemäßen Stabilisatoren, bedingt durch den thermischen Abbau des Polyols, eine sehr schlechte Kälteflexibilität, verglichen mit dem erfindungsgemäßen Ansatz 10.

Der Vergleichsansatz 14 enthält nur einen Kettenverlängerer (Hexandiol-1,6). Der Zyklus bei der thermoplastischen Verarbeitung ist sehr lang. Die Rückprallelastizität ist gering und die Schwindung sehr hoch.

Die beiden Ansätze 15 und 16 ohne den erfindungsgemäßen Pfropfkautschuk weisen eine starke Entmischung des Hartsegmentes auf. Sie lassen sich nicht schlierenfrei einfärben und zeigen eine hohe Schwindung von bis zu 3,2 %. Die Kälteeigenschaften diesen beiden nicht erfindungsgemäßen Ansätze sind ungünstig.

(Siehe Tabellen Seite 11 ff.)

Tabelle 5

Nicht erfindungsgemäße Beispiele

| | Komponente | Beispiel Nr. (Angaben in Gew.-%) 12 | 13 | 14 | 15 | 16 |
|---|---|---|---|---|---|---|
| Polytetramethylenetherdiol (OHZ 112) | a | 15,4 | 15,3 | 15,3 | 17,7 | 17,4 |
| Polytetramethylenetherdiol (OHZ 56) | a | 15,4 | 15,3 | 15,3 | | 17,4 |
| Butandiol-1,4-ethandiol-adipat (OHZ 54) | a | | | | 17,7 | |
| 2,6-Di-t-butyl-4-methylphenol | a | 0,1 | | 0,1 | 0,1 | 0,1 |
| ®Irganox-1010 (siehe Beispiel 1) | a | 0,2 | | 0,2 | 0,2 | 0,2 |
| Cyanacrylsäureester (siehe Beispiel 1) (UV-340) | a | 0,2 | | 0,2 | 0,2 | 0,2 |
| Carbodiimid (siehe Beispiel 1) | a | | | | 0,2 | |
| Butandiol-1,4 | b | 13,2 | 12,3 | | 14,2 | 13,9 |
| Hexandiol-1,6 | b | | 1,4 | 16,2 | 1,6 | 1,6 |
| 4,4'-Diisocyanatodiphenylmethan (enthaltend 2,5 % 2,4'-Isomeres) | c | 45,3 | 45,4 | 42,5 | 47,9 | 49,0 |
| Stearylamid | d | 0,2 | 0,2 | 0,2 | 0,2 | 0,2 |
| Pfropfkautschuk D) (Beispiel 1) | e | 10,0 | 10,0 | 10,0 | | |
| NCO/OH-Verhältnis | | 1,06 | 1,06 | 1,06 | 1,01 | 1,01 |

Tabelle 6

Eigenschaften der thermoplastischen Polyurethanelastomeren entsprechend Beispielen 12-16 (die Zusammensetzung entspricht den Angaben von Tabelle 5)

| Prüfung | DIN-Norm | Maßeinheit | 12 | 13 | 14 | 15 | 16 |
|---|---|---|---|---|---|---|---|
| Modul 100 % | 53 504 | MPa | 32,2 | 34,5 | 22,5 | 33,7 | 29,8 |
| Modul 300 % | 53 504 | MPa | | 56,8 | 43,0 | 57,7 | |
| Zugfestigkeit | 53 504 | MPa | 51,2 | 58,2 | 51,4 | 61,5 | 45,6 |
| Bruchdehnung | 53 504 | % | 287 | 314 | 358 | 326 | 274 |
| Shore-Härte A/D | 53 505 | | 98/70 | 98/73 | 98/61 | 98/69 | 98/67 |
| Elastizität | 53 512 | % | 48 | 53 | 39 | 46 | 48 |
| Weiterreißwiderstand | 53 515 | kN/m | 156 | 186 | 126 | 198 | 162 |
| Grenzbiegespannung 23°C | 53 452 | MPa | 36,8 | 50,9 | 14,1 | 36,9 | 30,4 |
| Grenzbiegespannung -20°C | 53 452 | MPa | 70,4 | 90,5 | 52,6 | 101 | 72,1 |
| Schlagzugversuch -10°C | | % | 136 | 42 | 223 | 32 | 104 |
| Dichte | 53 479 | $Mg/m^3$ | 1,12 | 1,12 | 1,10 | 1,17 | 1,13 |
| Schwindung | | % | 0,8 | 0,8 | 2,4 | 3,2 | 0,8 |

## Patentansprüche

1. Verfahren zur Herstellung von thermoplastischen Polyurethanelastomeren durch Umsetzung von

A) 4,4'-Diisocyanatodiphenylmethan oder dessen Isomerengemisch mit bis zu 5 Mol-% 2,4'-Diisocyanatodiphenylmethan mit

B) einem Polytetramethylenetherdiol der Molmasse 800 bis 3 000 sowie gegebenenfalls bis zu 60 Gew.-% anderen höhermolekularen Polyhydroxylverbindungen des Molekulargewichts 800 bis 3 000, und

C) einem Gemisch von einem Hauptkettenverlängerer-Diol und einem oder mehreren Cokettenverlängerer-Diolen im Molverhältnis von 97 : 3 bis 72 : 28, wobei der Hauptkettenverlängerer Butandiol-1,4 oder Hexandiol-1,6 und der zweite Kettenverlängerer ein Diol vom Molekulargewicht 62 bis 399 oder das Reaktionsprodukt davon mit Diisocyanatodiphenylmethan ist,

wobei das Molverhältnis der Komponente A) zu Komponente B) 5 : 1 bis 300 : 1 und das von A) zu B) + C) 0,9 : 1 bis 1,2 : 1 betragen,

in Gegenwart von

D) einem thermoplastischen Pfropfkautschuk auf Butadienbasis in Mengen von 5-25 Gew.-%, bezogen auf die Komponenten A-C und

E) 0,1 bis 3 Gew.-%, bezogen auf die Gesamtmenge aller Komponenten, an Antioxidantien und/oder UV-Absorbern und/oder Lichtschutzmitteln,

oder durch nachträgliche Mischung des Polyurethans mit dem thermoplastischen Pfropfkautschuk D).

2. Verfahren nach Anspruch 1, dadurch gekennzeichnet, daß als Komponente C) eine Mischung von 87 bis 94 Mol-% Butandiol-1,4 als Hauptkettenverlängerer und 13 bis 6 Mol-% Hexandiol-1,6 als Cokettenverlängerungsmittel eingesetzt werden.

3. Verfahren nach Ansprüchen 1 und 2, dadurch gekennzeichnet, daß neben dem Polytetramethylenetherdiol bis zu 60 Gew.-%, bezogen auf B), Butandiol-1,4-adipat oder Butandiol-1,4/Ethylenglykol-adipat, eingesetzt werden.

4. Verfahren nach Ansprüchen 1 bis 3, dadurch gekennzeichnet, daß als Komponente B) Polytetrahydrofuran einer mittleren Molmasse von 1 000 bis 1 500 eingesetzt wird.

5. Verfahren nach Ansprüchen 1 bis 4, dadurch gekennzeichnet, daß als Komponente B) ein Gemisch von Polytetramethylenetherdiol und Butandiol-1,4-adipat der Molmasse von etwa 1 800 bis 2 500 eingesetzt wird.

6. Verfahren nach Ansprüchen 1 bis 5, dadurch gekennzeichnet, daß als Antioxidantien phenolische Antioxidantien, bevorzugt 2,6-Di-t-butyl-4-methylphenol und Pentaerythrityl-tetrakis-3-(3,5-di-t-butyl-4-hydroxyphenyl)-propionat, zusammen mit UV-Absorber/Lichtschutzmitteln auf der Basis 1,2,2,6,6-Pentaalkylpiperidin-Derivaten oder Cyanacrylester-Derivaten verwendet werden.

7. Verfahren nach Ansprüchen 1 bis 6, dadurch gekennzeichnet, daß der thermoplastische Pfropfkautschuk in einer Menge von 6 bis 15 Gew.-% eingesetzt wird.

8. Verfahren nach Ansprüchen 1 bis 7, dadurch gekennzeichnet, daß die thermoplastischen Polyurethanelastomere im One-Shot-Verfahren auf einem Reaktionsextruder hergestellt werden.

9. Verwendung der nach dem Verfahren entsprechend Ansprüchen 1 bis 8 zugänglichen Polyurethanelastomere in Extrusions- und insbesondere Spritzgußverfahren zur Herstellung besonders kälteflexibler, kälteschlagfester Kunststoffteile, insbesondere Automobil- und Skischuhteile.

## Claims

1. Process for the preparation of thermoplastic polyurethane elastomers by the reaction of

A) 4,4'-diisocyanatodiphenylmethane or an isomeric mixture thereof with up to 5 mol% of 2,4'-diisocyanatodiphenylmethane with

B) a polytetramethylene ether diol having a molecular mass of from 800 to 3,000 and optionally up to 60 % by weight of other relatively high molecular weight polyhydroxyl compounds in the molecular weight range of from 800 to 3,000 and

C) a mixture of a main chain lengthening diol and one or more co-chain lengthening diols in a molar ratio of from 97 : 3 to 72 : 28, the main chain lengthening agent being butane-1,4-diol or hexane-1,6-diol and the second chain lengthening agent being a diol with a molecular weight of from 62 to 399 or the reaction product thereof with diisocyanatodiphenylmethane,

the molar ratio of component A) to component B) being from 5 : 1 to 300 : 1 and that of A) to B) + C) being from 0.9 : 1 to 1.2 : 1,

in the presence of

D) a thermoplastic graft rubber based on butadiene in quantities from 5 to 25 % by weight, based on components A to C, and

E) from 0.1 to 3 % by weight, based on the total quantity of all the components, of antioxidants or UV-absorbents and/or light protective agents,

or by subsequent mixing of the polyurethane with the thermoplastic graft rubber D).

2. Process according to claim 1, characterised in that the substance used as component C) is a mixture of from 87 to 94 mol% of butane-1,4-diol as main chain lengthening agent and from 13 to 6 mol%

of hexane-1,6-diol as co-chain lengthening agent.

3. Process according to claims 1 and 2, characterised in that in addition to polytetramethylene ether diol up to 60 % by weight, based on B), of butane-1,4-diol adipate or butane-1,4-diol/ethyleneglycol-adipate is used.

4. Process according to claims 1 to 3, characterised in that the substance used as component B) is polytetrahydrofuran having an average molar mass of from 1,000 to 1,500.

5. Process according to claims 1 to 4, characterised in that the substance used as component B) is a mixture of polytetramethylene ether diol and butane-1,4-diol-adipate having a molar mass of about 1,800 to 2,500.

6. Process according to claims 1 to 5, characterised in that the antioxidants used are phenolic antioxidants, preferably 2,6-di-t-butyl-4-methylphenol and pentaerythritol-tetrakis-3-(3,5-di-t-butyl-4-hydroxyphenyl) propionate, together with UV-absorbents/light protective agents based on 1,2,2,6,6-pentaalkylpiperidine derivatives or cyanoacrylic ester derivatives.

7. Process according to claims 1 to 6, characterised in that the thermoplastic graft rubber is used in a quantity of from 6 to 15 % by weight.

8. Process according to claims 1 to 7, characterised in that the thermoplastic polyurethane elastomers are prepared in a reaction extruder by the one-shot process.

9. Use of polyurethane elastomers obtainable by the process according to claims 1 to 8 in extrusion and especially in injection moulding processes for the production of plastics parts with exceptionally high flexibility in the cold and impact strength at low temperatures, in particular parts for motor vehicles and for ski shoes.

**Revendications**

1. Procédé de préparation d'élastomères thermoplastiques de polyuréthannes par réaction de :

A) le 4,4'-diisocyanatodiphénylméthane ou un mélange d'isomères de ce composé contenant jusqu'à 5 mol% de 2,4'-diisocyanatodiphénylméthane, avec

B) un polytétraméthylène-éther-diol de masse moléculaire 800 à 3 000 et le cas échéant jusqu'à 60 % en poids d'autres composés polyhydroxylés à haut poids moléculaire, de poids moléculaire 800 à 3 000, et

C) un mélange d'un agent d'allongement des chaînes principal consistant en un diol et d'un ou plusieurs agents d'allongement des chaînes auxiliaires consistant en diols, dans des proportions molaires de 97 : 3 à 72 : 28, l'allongeur de chaînes principal consistant en le 1,4-butane-diol ou le 1,6-hexane-diol et le deuxième allongeurs de chaînes en un diol de poids moléculaire 62 à 399 ou en le produit de réaction d'un tel diol avec le diisocyanatodiphénylméthane,

le rapport molaire du composant A) au composant B) étant de 5 : 1 à 300 : 1, et le rapport molaire de A) à B) + C) étant de 0,9 : 1 à 1,2 : 1,

en présence de :

D) un caoutchouc greffé thermoplastique à base de butadiène en quantité de 5 à 25 % en poids par rapport aux composants A) à C), et

E) 0,1 à 3 % en poids, par rapport à la quantité totale de tous les composants, d'antioxydants et/ou d'absorbeurs de lumière ultraviolette et/ou d'agents de protection contre la lumière, ou par mélange subséquent du polyuréthanne avec le caoutchouc greffé thermoplastique D).

2. Procédé selon la revendication 1, caractérisé en ce que l'on utilise en tant que composant C) un mélange de 87 à 94 mol% de 1,4-butane-diol en tant qu'allongeur de chaînes principal et 13 à 6 mol% de 1,6-hexane-diol en tant qu'agent allongeur de chaînes auxiliaire.

3. Procédé selon les revendications 1 et 2, caractérisé en ce que, en plus du polytétraméthylène-éther-diol, on utilise en proportions allant jusqu'à 60% en poids par rapport à B), l'adipate du 1,4-butane-diol ou un adipate du 1,4-butane-diol et de l'éthylène-glycol.

4. Procédé selon les revendications 1 à 3, caractérisé en ce que l'on utilise en tant que composant B) du polytétrahydrofuranne à une masse moléculaire moyenne de 1 000 à 1 500.

5. Procédé selon les revendications 1 à 4, caractérisé en ce que l'on utilise en tant que composant B) un mélange de polytétraméthylène-éther-diol et d'adipate du 1,4-butane-diol de masse moléculaire 1 800 à 2 500 environ.

6. Procédé selon les revendications 1 à 5, caractérisé en ce que l'on utilise en tant qu'antioxydant des antioxydants phénoliques, de préférence le 2,6-di-tert-butyl-4-méthylphénol et du tétrakis-3-(3,5-di-tert-butyl-4-hydroxyphényl)-propionate du pentaérythritol, avec des agents de protection contre la lumière/absorbeurs de lumière ultraviolette à base de dérivés de 1,2,2,6,6-pentaalkylpipéridines ou de dérivés d'esters cyanacryliques.

7. Procédé selon les revendications 1 à 6, caractérisé en ce que l'on utilise le caoutchouc greffé thermoplastique en quantité de 6 à 15 % en poids.

8. Procédé selon les revendications 1 à 7, caractérisé en ce que l'on prépare les élastomères thermoplastiques de polyuréthannes par la technique « one-shot » sur une extrudeuse de réaction.

9. Utilisation des élastomères de polyuréthannes obtenus par le procédé selon les revendications 1 à

8 dans des opérations d'extrusion et plus spécialement de moulage par injection pour la fabrication en particulier de pièces de résines synthétiques flexibles à froid et résistantes au choc à froid, en particulier de pièces d'automobiles et de chaussures de ski.